# NEUE EUROPÄISCHE PATENTSCHRIFT

(11) **EP 1 649 201 B2**
(45) Veröffentlichungstag und Bekanntmachung des Hinweises auf die Entscheidung über den Einspruch: **10.08.2011**
(45) Hinweis auf die Patenterteilung: 04.07.2007
(21) Anmeldenummer: 04737387.3
(22) Anmeldetag: 15.07.2004
(51) Int. Cl.: F16K 11/087, F16K 37/00

(54) **MEHRWEGEVENTIL**
MULTIPORT VALVE
SOUPAPE A VOIES MULTIPLES

(30) Priorität: 24.07.2003 AT 11762003; 22.01.2004 AT 752004
(43) Veröffentlichungstag der Anmeldung: 26.04.2006
(73) Patentinhaber: Schwarz, Alois, A-6382 Kirchdorf in Tirol (AT)
(72) Erfinder: Schwarz, Alois, A-6382 Kirchdorf in Tirol (AT)
(74) Vertreter: Hehenberger, Reinhard
(86) Internationale Anmeldenummer: PCT/AT2004/000257
(87) Internationale Veröffentlichungsnummer: WO 2005/010415

(56) Entgegenhaltungen:
- WO-A1-84/01799
- DE-A- 4 407 689
- DE-U- 29 817 522
- FR-A3- 2 790 299
- US-A- 4 232 709
- US-A- 4 479 459
- US-A1- 2003 086 470
- US-B1- 6 182 692
- US-B1- 6 273 134

## Beschreibung

Die gegenständliche Erfindung betrifft ein Mehrwegeventil gemäß dem Oberbegriff des Patentanspruches 1.

Bekannte Mehrwegeventile weisen ein mit drei Anschlussstutzen ausgebildetes Gehäuse auf, innerhalb dessen sich ein gegenüber dem Ventilgehäuse verdrehbarer Ventilkörper befindet, welcher mit einer durchgehenden Bohrung und mit einer an diese anschließenden Querbohrung ausgebildet ist. Mittels eines derartigen bekannten Mehrwegeventils können die an dieses angeschlossene Leitungen wahlweise miteinander verbunden werden.

In Heizungsanlagen wird der Ventilkörper eines derartiges Ventils in diejenige Stellung verdreht, in welcher der Heizungskreis und der Verbraucherkreis miteinander verbunden sind. An den dritten Anschlussstutzen ist eine Leitung anschließbar, durch welche in die Heizungsanlage eine Spülflüssigkeit einleitbar ist. Eine Spülung des Heizungskreises oder des Verbraucherkreises ist dann erforderlich, sobald sich in diesen Kreisen Lufteinschlüsse befinden, durch welche die Funktionsfähigkeit der Heizanlage beeinträchtigt wird. Durch eine Spülung werden diese Lufteinschlüsse entfernt. Eine Spülung erfolgt dadurch, dass über eine an den dritten Anschlussstutzen angeschlossene Leitung über den Heizungsvorlauf entweder dem Heizungskreis oder dem Verbraucherkreis eine Spülflüssigkeit zugeführt wird, welche über ein im Heizungsrücklauf angeordnetes zweites derartiges Ventil aus dem Heizungskreis bzw. dem Verbraucherkreis abgeleitet wird.

Im Heizungsbetrieb sind der Heizungskreis und der Verbraucherkreis über diese beiden Mehrwegeventile verbunden. In den an die Mehrwegeventile angeschlossenen Leitungen des Spülkreises befinden sich Sperrventile, durch welche der Spülkreis abgesperrt ist. Sobald die Ventilkörper der beiden Mehrwegeventile aus den für den Heizungsbetrieb erforderlichen Drehlagen um 90° in die eine bzw. in die andere Richtung verdreht werden und weiters die im Spülkreis befindlichen Sperrventile geöffnet werden, wird der Spülkreis über die dritten Leitungen entweder an den Heizungskreis oder an den Verbraucherkreis angeschlossen, wodurch einer dieser Kreise gespült wird, um in diesen Kreisen enthaltene Luft zu entfernen.

Da die Verdrehbarkeit des Ventilkörpers um 90° in der einen und in der anderen Drehrichtung jeweils durch Anschläge begrenzt ist, ist die jeweilige Endlage des Ventilkörpers genau definiert, wodurch auch die Wirkungsweise des Mehrwegeventils bestimmt ist. In der mittleren Drehlage ist der Heizungskreis an den Verbraucherkreis angeschlossen, wobei die im Spülkreis befindlichen Sperrventile geschlossen sein müssen. In den beiden anderen um 90° verdrehten Lagen des Ventilkörpers der beiden Mehrwegeventile sind bei geöffneten Sperrventilen entweder der Heizungskreis oder der Verbraucherkreis an den Spülkreis angeschlossen. Maßgeblich für die vorstehend erläuterte Funktion ist es jedoch, dass sich in den Anschlüssen für den Spülkreis jeweils ein Sperrventil befindet.

Aus der DE 29817522 U1 ist weiters ein Ventil bekannt, welches mit drei jeweils im rechten Winkel zueinander stehenden Anschlüssen ausgebildet ist und dessen Ventilkörper mit einer durchgehenden Bohrung sowie mit einer an diese anschließende Querbohrung ausgebildet ist. Dabei befinden sich die Achsen der durchgehenden Bohrung in einer Normalebene auf die Drehachse des Ventilkörpers, wogegen sich die Achse der Querbohrung in der Drehachse des Ventilkörpers befindet. Dieses Ventil ist in einer ersten Drehlage des Ventilkörpers geöffnet, wobei Medium von einem ersten Anschluss zu den beiden anderen Anschlüssen strömen kann, wogegen es in einer zweiten Drehlage des Ventilkörpers verschlossen ist, wogegen keinerlei Strömung zu den beiden anderen Anschlüssen erfolgen kann.
Aus dem DE-GM G8615858.9 U1 und aus der FR 2790299 A3 sind Mehrwegeventile bekannt, deren Ventilkörper in ihrer Verdrehbarkeit durch Anschläge begrenzt sind, welche nur mit drei Anschlussstützen ausgebildet sind, und an welche deshalb, da sie mit keinen mit einem Außengewinde versehenen Anschlussstutzen ausgebildet sind, keine Spülschläuche anschließbar sind, weswegen sie eine sehr beschränkte Funktionalität aufweisen.
Aus der US-4479459 A ist ein motorbetriebenes Steuerventil für eine Anlage zur Dampferzeugung bekannt, dessen Ventilkörper nur um jeweils 90° verdrehbar ist und welches gleichfalls nicht mit einem Anschlussstutzen ausgebildet ist, welcher ein Außengewinde für den Anschluss eines Spülschlauches aufweist, wodurch in einfacher Weise eine Spülung der Anlage ermöglicht wird.

Der gegenständlichen Erfindung liegt die Aufgabe zugrunde, ein Mehrwegeventil zu schaffen, bei welchem in einer ersten Drehlage des Ventilkörpers ein erster Anschluss mit einem zweiten Anschluss verbunden ist, wogegen keine Strömung von Medium zu einem dritten Anschluss erfolgt und wobei in zwei weiteren Drehlagen der erste Anschluss bzw. der zweite Anschluss jeweils mit einem dritten Anschluss verbunden ist. Der Erfindung liegt dabei die Aufgabe zugrunde, ein Mehrwegeventil für Heizungsanlagen zu schaffen, welches so ausgebildet ist, dass durch dieses auch der Anschluss an die dritte Leitung versperrbar ist, sodass darauf verzichtet werden kann, im Spülkreis zwei Sperrventile vorzusehen. Hierdurch wird eine Vereinfachung und Verbilligung in der Installation bewirkt.

Diese Aufgaben werden erfindungsgemäß durch die Merkmale des kennzeichnenden Teiles Patentanspruches 1 gelöst.

Zudem kann dieses Mehrwegeventil mit einer an sich bekannten Temperaturanzeige ausgebildet sein, welche gegenüber dem Ventilgehäuse verdrehbar und feststellbar ist. Nach einer bevorzugten Ausführungsform ist die Temperaturanzeige an einem Tragring befestigt, welcher im Ventilgehäuse verdrehbar gelagert ist und welcher mit Griffen, Stiften od.dgl. ausgebildet ist, mittels welcher er gegenüber dem Ventilgehäuse verdrehbar ist. Insbesondere ist der Tragring mit einem von seiner Außenfläche abragenden Ringflansch ausgebildet, welcher von einem am Ventilgehäuse befestigten Haltering übergriffen ist. Dabei kann der Haltering in mindestens eine Ausnehmung od.dgl., insbesondere in Bohrungen, des Ventilgehäuses eingesetzt und in dieser durch Klemmung befestigt sein.

Vorzugsweise der vierte Anschluss durch eine Bohrung mit einem Innengewinde gebildet. Nach einer bevorzugten Ausführungsform liegen die beiden Anschlüsse, welchen ein Verschlusselement und eine weitere Armatur zugeordnet sind, im Ventilgehäuse einander diametral gegenüber und sind sie zueinander koaxial. Die zusätzliche Armatur kann z.B. durch einen Entlüftungstopf, einen Temperatursensor, ein Druckmessgerät, ein Druckausgleichsgefäß, ein Überdruckventil oder eine Befestigungseinrichtung gebildet sein.

Nach einer weiteren bevorzugten Ausführungsform ist die Stellspindel mit einer Bohrung ausgebildet, in welche ein Temperaturfühler eingesetzt ist. Vorzugsweise ist dabei die Stellspindel mit einer zum Ventilkörper durchgehenden Bohrung ausgebildet, in welche ein Temperaturfühler oder ein Druckmessfühler eingesetzt ist. Hierbei ist es dann erforderlich, die Stellspindel gegenüber dem Ventilgehäuse mittels einer Stoffbüchse abzudichten. Hierbei kann auf die Stellspindel ein Rohrstück aufgeschraubt sein, durch welches die Stoffbuchse verdichtbar ist.

Nach einer weiters bevorzugten Ausführungsform ist zwischen dem kugelförmigen Ventilkörper und dem Ventilgehäuse ein unter Wirkung einer Druckfeder stehender Dichtungsring vorgesehen. Hierfür können die Anschlussstutzen jeweils mit einem Innengewinde ausgebildet sein, in welches ein Haltering für den Dichtungsring und die Druckfeder eingeschraubt ist.

Schließlich ist vorzugsweise dem Handgriff bzw. der Stellspindel ein Fühler zugeordnet, durch welchen die Drehlage des Ventilkörpers gegenüber dem Ventilgehäuse feststellbar ist.

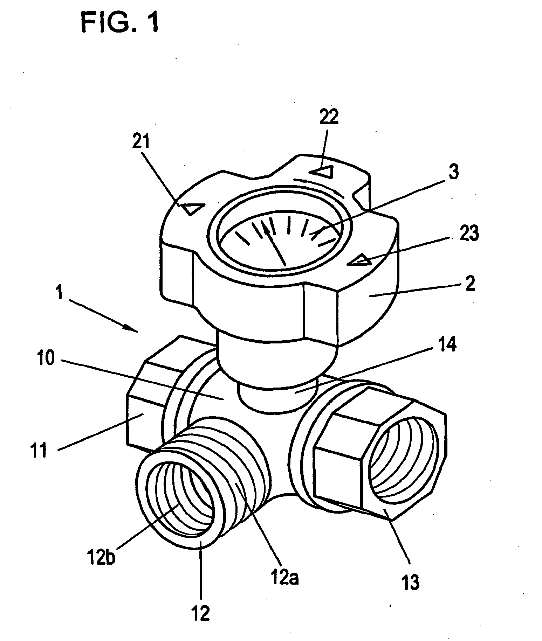

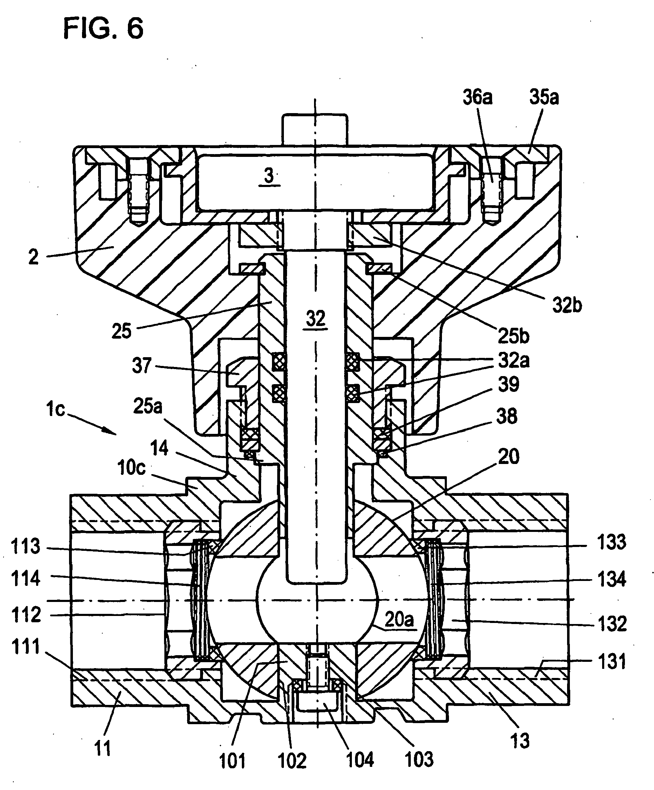

Der Gegenstand der Erfindung ist nachstehend anhand von in der Zeichnung Fig. 6 dargestellten Ausführungsbeispielen näher erläutert. Die Fig.1 bis Fig.5a sowie 7 und 8 welche nicht erfindungsgemäß sind, dienen zur Erläuterung eines Mehrwegeventils, welches anhand der Fig.6 erläutert ist. Es zeigen:
- Fig. 1: eine erste Ausführungsform eines Mehrwegeventils, in axonometrischer Darstellung;
- Fig.2, 2a, 2b: ein Mehrwegeventil in drei Drehstellungen des Ventilkörpers, jeweils in Draufsicht;
- Fig.3, 3a, 3b: einen Heizungskreis mit unterschiedlichen Drehlagen der zwei in diesem Heizungskreis enthaltenen Mehrwegeventile, wodurch der Heizbetrieb erfolgt bzw. die Spülung des Heizkreises oder des Verbraucherkreises vorgenommen werden kann;
- Fig.4: eine Ausführungsvariante des Mehrwegeventils gemäß Fig.1, in axonometrischer Darstellung;
- Fig.4a: das Mehrwegeventil gemäß Fig. 4, in Vorderansicht sowie teilweise aufgeschnitten,
- Fig.4b: dieses Mehrwegeventil, im Schnitt nach der Linie IVb-IVb der Fig.4,
- Fig.5, 5a: eine Ausführungsform eines Mehrwegeventils, in zwei unterschiedlichen axonometrischen Darstellungen,
- Fig.6: eine Ausführungsform eines erfindungsgemäßen Mehrwegeventils, in axialem Schnitt,
- Fig.7: eine Ausführungsform eines Mehrwegeventils, in axonometrischer Darstellung, und
- Fig.8: eine Ausführungsform eines Mehrwegeventils, in Draufsicht und teilweise aufgebrochen.

Das in Fig1 dargestellte Mehrwegeventil 1 besteht aus einem Ventilgehäuse 10, welches mit drei jeweils im rechten Winkel zueinander angeordneten Anschlussstutzen 11, 12 und 13 ausgebildet ist. Weiters ist das Ventilgehäuse 10 mit einem quer von den Anschlussstutzen 11, 12 und 13 abragenden Rohrstück 14 ausgebildet, in welchem sich eine Stellspindel für einen im Gehäuse 10 befindlichen und mittels eines Handgriffes 2 verdrehbaren Ventilkörper befindet. Der Ventilkörper ist mit einer durchgehenden Bohrung und mit einer an diese anschließenden Querbohrung ausgebildet. Da der Ventilkörper ohne jeglichen Anschlag ringsherum verdrehbar ist, können in Abhängigkeit von dessen Drehstellung entweder die Kanäle der Anschlussstutzen 11 und 12 oder der Anschlußstutzen 11 und 13 oder die Anschlussstutzen 12 und 13 miteinander verbunden werden, wogegen der Kanal des jeweils dritten Anschlussstutzens versperrt ist.

Die Anschlussstutzen 11 und 13 sind mit einem Innengewinde ausgebildet, wogegen der Anschlussstutzen 12 mit einem Außengewinde 12a und bzw. oder mit einem Innengewinde 12b ausgebildet ist.

Weiters ist dieses Mehrwegeventil 1 zudem mit einer Einrichtung zur Messung und Anzeige der Temperatur ausgebildet, wobei sich innerhalb des Drehgriffes 2 eine Temperaturanzeige 3 befindet. Zudem ist der Drehgriff 2 mit Markierungen 21, 22 und 23 ausgebildet, durch welche die Drehstellungen des Ventilkörpers angezeigt werden.

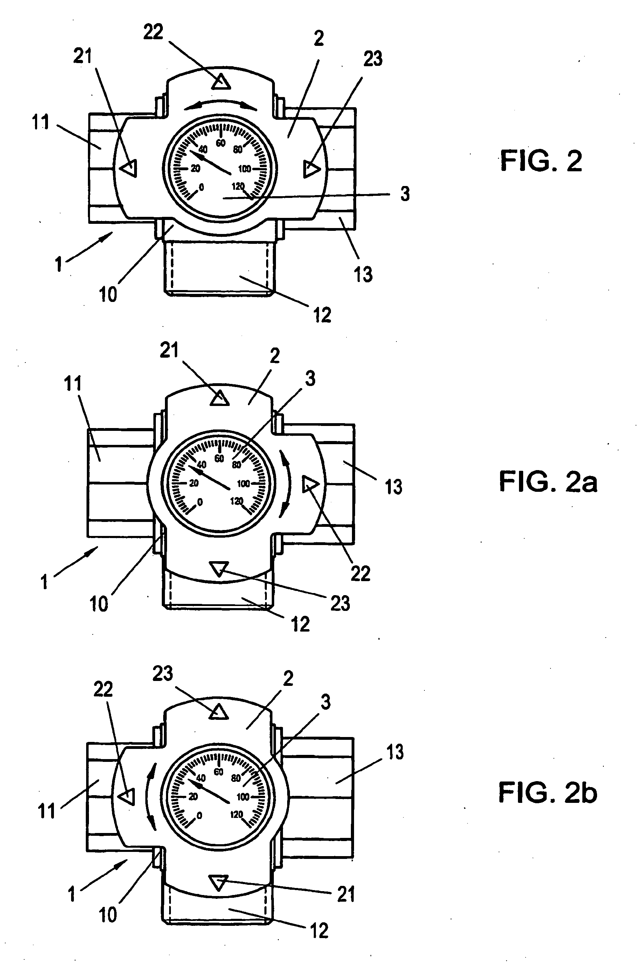

Wie dies aus den Fig.2, 2a und 2b ersichtlich ist, sind entweder die Kanäle der Anschlussstutzen 11 und 13 oder der Anschlussstutzen 12 und 13 oder der Anschlussstutzen 11 und 12 miteinander verbunden.

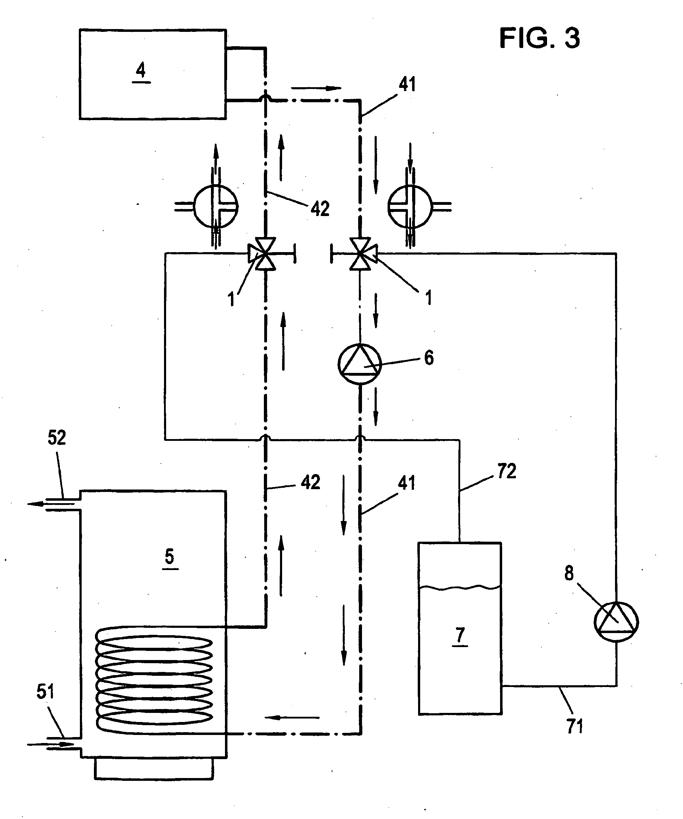

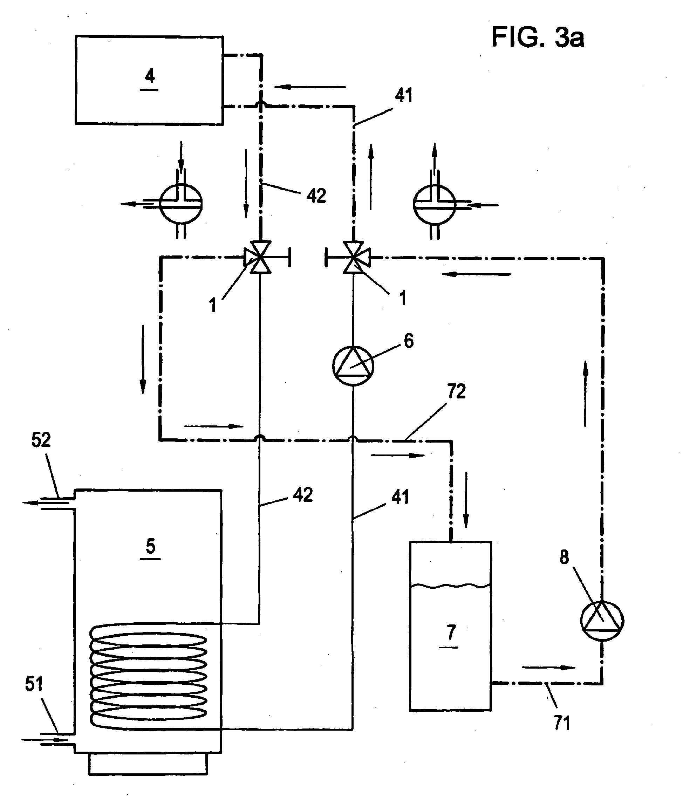

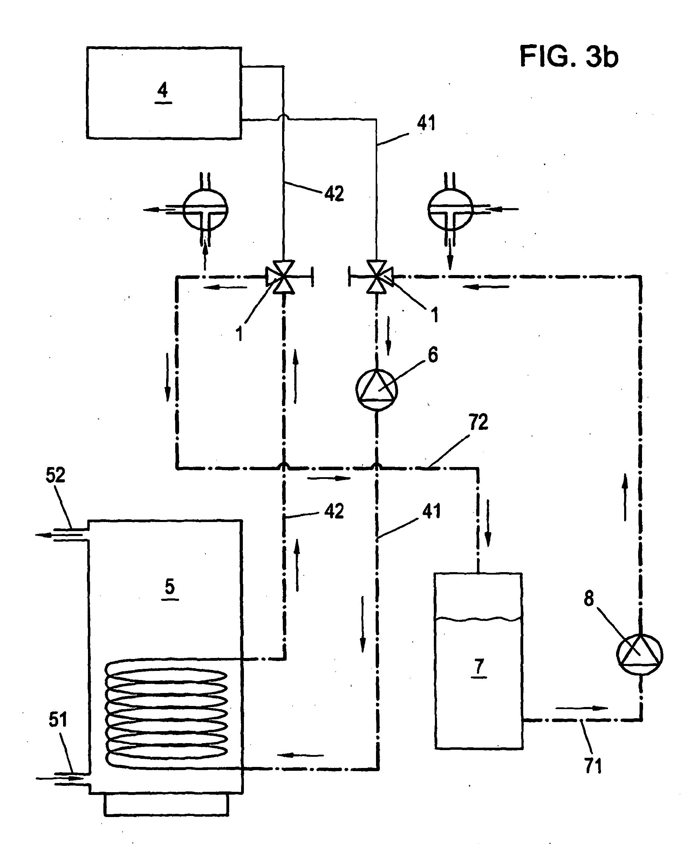

In den Fig.3, 3a und 3b ist weiters eine Heizungsanlage mit einer Spülanlage in unterschiedlichen Betriebsstellungen dargestellt. Dabei ist ein Heizungskessel 4 über einen Heizungsvorlauf 41 und über einen Heizungsrücklauf 42 mit einem Verbraucher, z.B. einem Boiler 5, verbunden. Der Boiler 5 weist einen Kaltwasserzulauf 51 sowie einen Heißwasserablauf 52 auf. Im Heizungskreis befindet sich weiters eine Pumpe 6. Dem Heizungskreis ist ein Spülkreis zugeordnet, welcher einen Spülbehälter 7 und eine Pumpe 8 enthält und welcher mittels Leitungen 71 und 72 über zwei Mehrwegeventile 1 an den Heizungsvorlauf 41 und an den Heizungsrücklauf 42 anschließbar ist.

In Fig.3 befinden sich die Mehrwegeventile 1 in derjenigen Stellung, in welcher sich der Heizungskreis im Betrieb befindet, wobei der Heizkessel 4 über die beiden Mehrwegeventile 1 an den Boiler 5 angeschlossen ist.
In Fig.3a ist diejenige Stellung der beiden Mehrwegeventile 1 dargestellt, in welcher der Spülkreis an den Heizungskessel 4 angeschlossen ist, wodurch dessen Spülung erfolgen kann.
In Fig.3b ist diejenige Stellung der beiden Mehrwegeventile 1 dargestellt, in welcher der Spülkreis an den Boiler 5 angeschlossen ist, wodurch dessen Spülung erfolgen kann.

Dadurch, dass die Mehrwegeventile 1 mit Markierungen 21, 22 und 23 ausgebildet sind, durch welche die Drehstellungen der Ventilkörper angezeigt werden, können diese Mehrwegeventile 1 ohne die sonst vorgesehenen Anschläge zur Festlegung der Drehstellung der Ventilkörper ausgebildet sein. Da hierdurch die Ventilkörper um 360° verdrehbar sind, sind durch diese Mehrwegeventile 1 die Anschlussstutzen für den Spülkreis versperrbar, wodurch hierfür keine eigenen Sperrventile erforderlich sind. Hierdurch wird somit die Funktionalität dieser Mehrwegeventile 1 maßgeblich erhöht.

Da in der Regel in der Heizungsanlage kein eigener Spülkreis vorgesehen ist, sondern zur Spülung ein üblicher Gartenschlauch angeschlossen wird, ist es zweckmäßig, den Anschlussstutzen für den Spülkreis mit einem Außengewinde auszubilden. Hierdurch weist die Spülleitung einen hinreichend großen Querschnitt auf, dass gegenüber den Leitungen des Heizkreises keine Erhöhung des Druckes auftritt, wodurch die Spülwirkung beeinträchtigt werden würde. Demgegenüber können die beiden anderen Anschlussstutzen, wie dies allgemein üblich ist, mit Innengewinden ausgebildet sein.

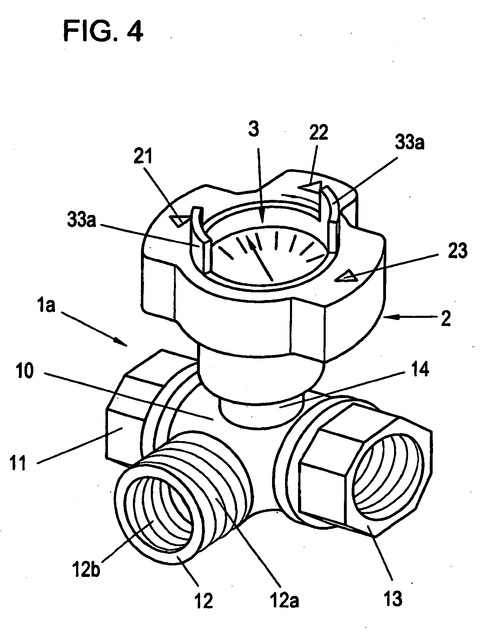

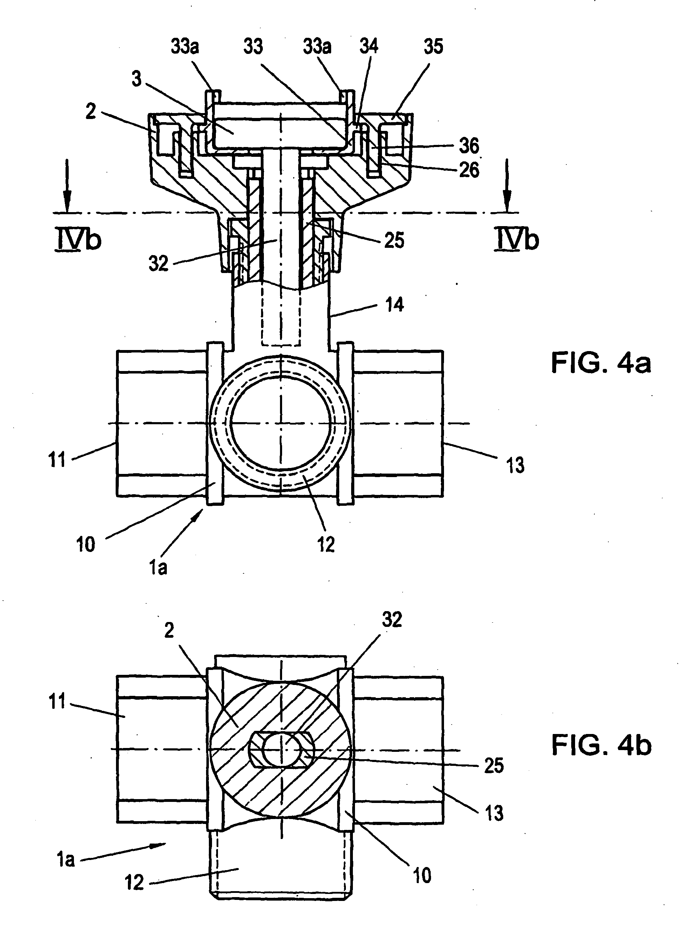

In den Fig.4, 4a und 4b ist eine Ausführungsvariante eines Mehrwegeventils 1a dargestellt, bei welchem die Temperaturanzeige 3 gegenüber dem Ventilgehäuse 10 verdrehbar ist, um sie der Einbaulage des Mehrwegeventils 1a entsprechend einstellen zu können. Wie dies aus den Fig. 4a und 4b ersichtlich ist, ist das Rohrstück 14 mit einem Innengewinde ausgebildet, in welchem eine Stellspindel 25 zur Verstellung des Ventilkörpers verdrehbar ist. Die Verdrehung der Stellspindel 25 erfolgt mittels des auf diese aufgekeilten Drehgriffes 2. Weiters sind der Drehgriff 2 und die Stellspindel 25 mit zentrischen Bohrungen ausgebildet, in welche ein Thermofühler 32 eingesetzt ist. Am oberen Ende des Thermofühlers 32 befindet sich die Temperaturanzeige 3.

Die Temperaturanzeige 3 befindet sich innerhalb eines Tragringes 33, welcher mit einem von seiner Außenwand abragenden Ringflansch 34 ausgebildet ist. Der Ringflansch 34 ist von einem Haltering 35 umschlossen, welcher mittels Bolzen 36 in Bohrungen 26, welche im Haltegriff 2 vorgesehen sind, an diesem befestigt ist. Weiters ist der Tragring 33 mit über den Drehgriff 2 vorragenden Griffen 33a ausgebildet, mittels welcher er gegenüber dem Haltering 35 verdrehbar ist. Mittels des Tragringes 33 ist die Temperaturanzeige 3 in beliebige Lagen verdrehbar, wobei sie in diesen Lagen feststellbar ist.
Durch diese Verdrehbarkeit können die Temperaturanzeigen 3 dieser Mehrwegeventile 1a unabhängig davon, in welcher Lage die Mehrwegeventile 1a eingebaut sind, so verdreht werden, dass sämtliche Temperaturanzeigen 3 die gleiche Lage aufweisen.

Ein derartiges Mehrwegeventil kann in beliebig ausgebildeten Leitungssystemen verwendet werden. Dies gilt insbesondere für Heizungssysteme, um in Kollektoren, Heizungskesseln, Fußbodenheizungen, Wandheizungen u.dgl. enthaltene Lufteinschlüsse durch Spülung entfernen zu können.

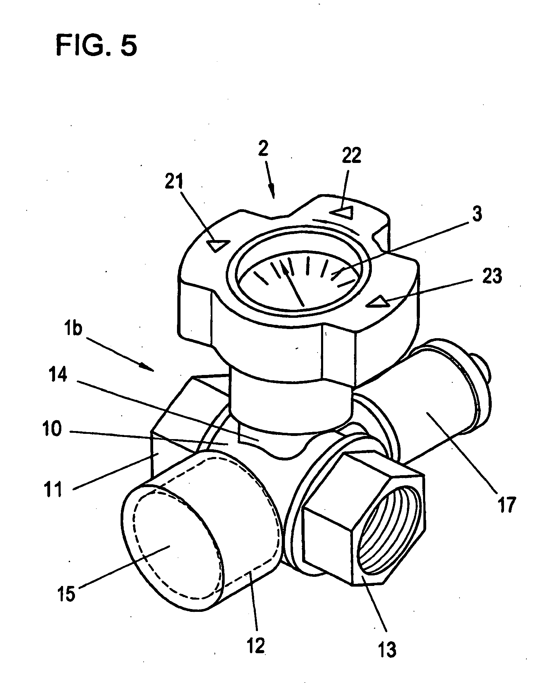

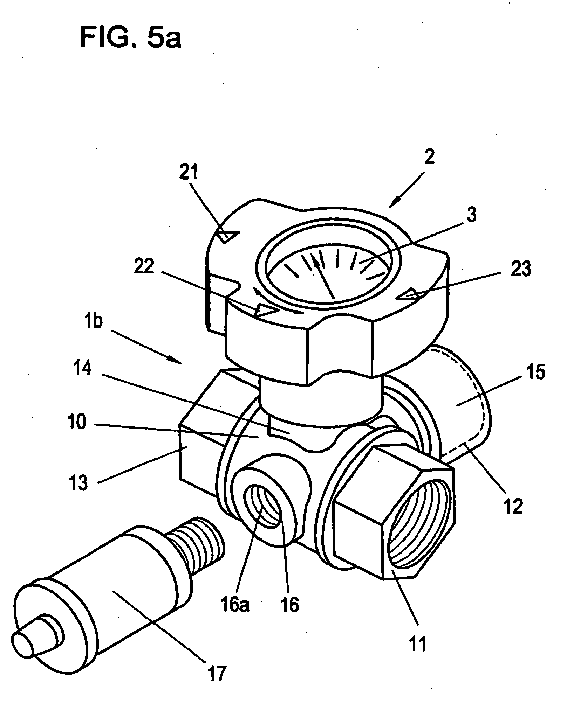

In den Fig. 5 und 5a ist eine weitere Ausführungsform eines Mehrwegeventils 1b dargestellt, welches sich gegenüber dem Mehrwegeventil gemäß Fig. 1 dadurch unterscheidet, dass dem Anschlussstutzen 12 eine Abschlusskappe 15 zugeordnet ist, durch welche der Anschlussstutzen 12 verschließbar ist und dass das Gehäuse 10 auf der dem Stutzen 12 gegenüberliegenden Seite mit einer Bohrung 16 ausgebildet ist, welche mit einem Innengewinde 16a ausgebildet ist. In diese Bohrung 16 ist eine Armatur, z.B. ein Entlüftungstopf 17, einsetzbar. Diese weitere Armatur kann jedoch z.B. auch durch einen Temperatursensor, ein Druckmessgerät, ein Druckausgleichsgefäß, eine Sicherheitsarmatur, ein Befestigungselement gebildet sein. Anstelle der Innenbohrung kann das Gehäuse 1b mit einem weiteren Stutzen ausgebildet sein, welcher mit einem Innengewinde oder mit einem Außengewinde ausgebildet ist.

Durch die Abschlusskappe 15 kann der Anschlussstutzen 12 abgeschlossen werden. Durch eine entsprechende Verdrehung des Ventilköpers können die Kanäle der Anschlussstutzen 11 und 13 gemeinsam oder wahlweise mit der Bohrung 16 verbunden werden, wodurch diese Leitungen mit weiteren Armaturen verbunden werden können, sodass diese Armaturen in Funktion treten können. Anstelle der Anschlussstutzen kann das Ventilgehäuse auch mit Anschlussbohrungen ausgebildet sein. Sobald der Ventilkörper in eine solche Lage gebracht ist, dass die Leitung zu den weiteren Armaturen unterbrochen ist, können diese ausgetauscht werden.

Hiermit ist ein Mehrwegeventil geschaffen, durch welches in Abhängigkeit davon, welche Armatur angeschlossen wird, mehrere von Funktionen erfüllt werden können.

In Fig.6 ist eine erste Ausführungsform eines erfindungsgemäßen Mehrwegeventils 1c dargestellt, welches gegenüber den anderen Ausführungsformen in mehrfacher Hinsicht ergänzt ist:

Wie dies aus dieser Darstellung ersichtlich ist, ist die Stellspindel 25 mit einem nach außen abragenden Ringflansch 25a ausgebildet. Weiters ist der Stutzen 14 mit eine Innengewinde ausgebildet, in welches ein Rohrstück 37 eingeschraubt ist. Zwischen dem Rohrstück 37 und dem Flansch 25a befinden sich ein O-Ring 38 und eine Stoffbuchse 39. Weiters sind die Stellspindel 25 und der Ventilkörper 20, welcher kugelförmig ist, mit ineinander übergehenden, durchgehenden Bohrungen ausgebildet, in welche der Thermofühler 32 eingesetzt ist. Anstelle des Thermofühlers kann auch ein Druckmessgerät vorgesehen sein. Der Thermofühler 32 bzw. das Druckmessgerät ragen in den im Ventilkörper 20 befindlichen Strömungskanal 20a ein. Weiters sind zwischen der Stellspindel 25 und dem Thermofühler 32 bzw. dem Druckmessgerät zwei Dichtungsringe 32a vorgesehen. Zudem ist am oberen Ende der Stellspindel 25 ein Sprengring 25b vorgesehen. Weites ist der Thermofühler 32 an seinem oberen Ende mit einem Außengewinde ausgebildet, auf welches ein Befestigungsring 32b aufgeschraubt ist. Schließlich ist der Haltering 35a mittels Schrauben 36a am Handgriff 2 befestigt.

Die Abdichtung der Stellspindel 25 gegenüber dem Ventilgehäuse 10c erfolgt mittels des O-Ringes 38 und der Dichtungsbuchse 39. Soferne diese Abdichtung funktionsunfähig wird, kann das Rohrstück 37 in das Ventilgehäuse 10c weiter hineinverdreht werden, wodurch die Dichtungsbuchse 39 verdichtet wird, sodass deren Dichtfunktion wieder hergestellt wird.
Da der Thermofühler 32 bzw. das Druckmessgerät in den Strömungskanal 20a einragen, ist auch deren Abdichtung gegenüber der Stellspindel 25 erforderlich, was durch die Dichtungsringe 32a bewirkt wird. Der Sprengring 25b dient dazu, den Handgriff 2 in seiner Lage an der Stellspindel 25 festzuhalten.

Weiters sind die Anschlussstutzen 11 und 13 jeweils mit einem Innengewinde 111 und 131 ausgebildet, in welches Halteringe 112, 132 für jeweils einen Dichtungsring 113, 133 und für eine Druckfeder 114, 134 eingeschraubt sind. Durch die Dichtungsringe 113, 133 wird die erforderliche Abdichtung zwischen den Anschlussstutzen 11 und 13 und dem kugelförmigen Ventilkörper 20 bewirkt. Durch die Druckfedern 114, 134 wird gewährleistet, dass ungeachtet der durch die Dichtungsringe 113, 133 erzielten Abdichtung eine leichte Verstellbarkeit des Ventilkörpers 20 gewährleistet ist.

Weiters ist das Ventilgehäuse 10c auf der dem Stutzen 14 gegenüber liegenden Seite mit einem nach innen abragenden Zapfen 101 ausgebildet, welcher in eine im kugelförmigen Ventilkörper 20 befindliche Bohrung 102 einragt. Um diesen Zapfen 101 ist der Ventilkörper 20 verdrehbar gelagert. Weiters ist dieser Zapfen 101 mit einer zum Kanal 20a durchgehenden Bohrung 103 ausgebildet, welche mit einem Innengewinde ausgebildet ist. In diese Bohrung 103 kann eine weitere Armatur eingesetzt werden. Zudem kann in diese Bohrung 103 ein Haltebügel od.dgl. eingesetzt werden. Soferne diese Bohrung 103 nicht verwendet wird, kann sie mittels einer abgedichteten Schraube 104 verschlossen werden, wobei diese Schraube auch mit einem Haltebügel ausgebildet sein kann.

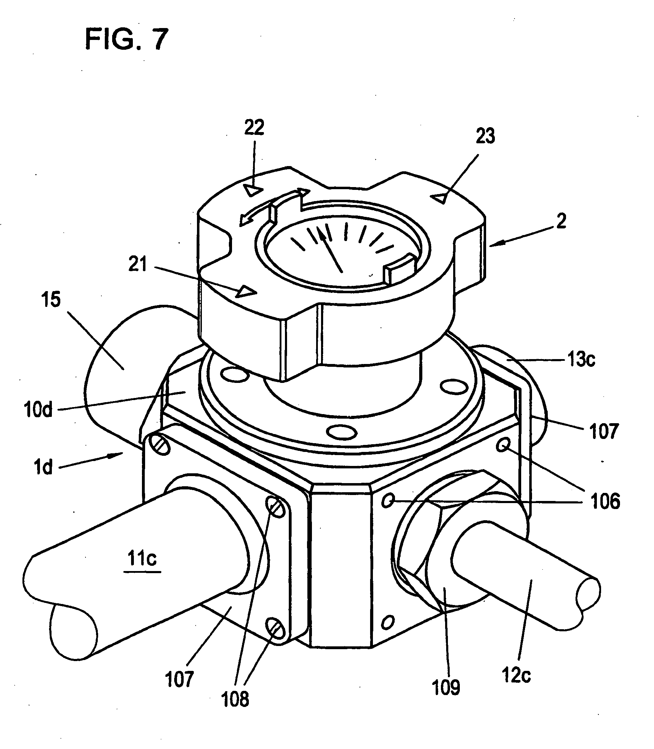

Das in Fig.7 dargestellte Ventilgehäuse 10d unterscheidet sich von den anderen Ventilgehäusen dadurch, dass es aus einem, Kunststoffmaterial, insbesondere aus Polyphthalimid, hergestellt ist. Da jedoch bei einem Kunststoffmaterial aufgrund der Wärmedehnungen bei mittels Gewinde hergestellten Anschlüssen Undichtheiten auftreten können, ist das Ventilgehäuse 10d an seinen vier seitlichen Anschlussflächen mit z.B. vier Bohrungen 106 ausgebildet, in welche Halteschrauben 108 od.dgl. für Anschlussflansche 107 einsetzbar sind. Wie dies aus dieser Darstellung ersichtlich ist, sind die beiden Hauptleitungen 11c und 13d am Ventilgehäuse 1d mittels der Anschlussflansche 107 befestigt, wogegen der Anschluss einer Nebenleitung 12c, z.B. eines Schlauches oder einer Armatur, mittels einer Gewindemuffe 109 bewirkt ist.

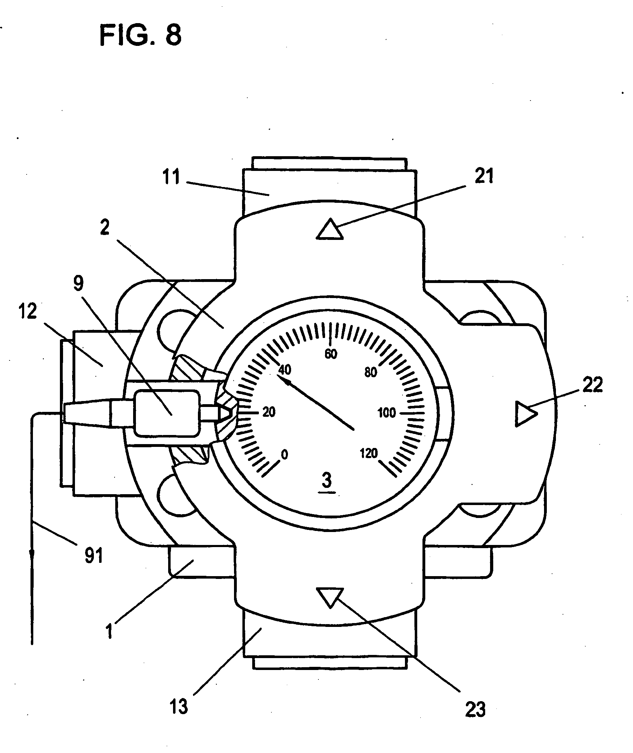

Bei dem in Fig.8 dargestellten dritte Ausführungsbeispiel ist dem Handgriff 2 ein Lagefühler 9 zugeordnet. Dieser Lagefühler 9 dient dazu, die Drehlage des Handgriffes 2 gegenüber dem Ventilgehäuse 10 zu erfassen. Das Ausgangssignal des Lagefühlers 9 wird über eine Steuerleitung 91 an eine Steuereinheit abgegeben. Ein am Mehrwegeventil angeordneter Steuerfühler 9 ist dann zweckmäßig, soferne durch das Mehrwegeventil die Leitung zum Heizkessel abgesperrt ist, weswegen dieser nicht in Funktion gesetzt werden darf.

Es wird darauf verwiesen, dass die anhand der Fig.6 bis 8 erläuterten Merkmale auch bei den anderen Ausführungsformen vorgesehen sein können.

Durch die gegenständliche Erfindung ist somit ein Mehrwegeventil geschaffen, dessen Ventilkörper um 360° verdrehbar ist und welches mit einer Mehrzahl von weiteren Armaturen ausgebildet sein kann, wodurch durch dieses eine Vielzahl von unterschiedlichen Funktionen erfüllt werden kann. Diese Vielzahl von Funktionen ist insbesondere dadurch möglich, dass der Ventilkörper um 360° verdrehbar ist, wobei dessen Drehlage angezeigt wird.

## Patentansprüche

1. Mehrwegeventil (1) für eine Heizungsanlage, an welche eine Spülanlage anschließbar ist, mit einem Ventilgehäuse (10), in welchem sich ein gegenüber diesem mittels eines Handgriffes (2) und einer Stellspindel (25) verdrehbarer Ventilkörper (20) befindet, wobei das Ventilgehäuse (10) mit mindestens drei jeweils im rechten Winkel zueinander stehenden Anschlussstutzen (11, 12, 13) ausgebildet ist, weiters der Ventilkörper (20) mit einer durchgehenden Bohrung (20a) sowie mit einer an diese anschließenden Querbohrung ausgebildet ist und sich die Achsen der am Ventilgehäuse (10) befindlichen Anschlussstutzen (11, 12, 13) sowie der im Ventilkörper (20) befindlichen Bohrungen in einer Normalebene auf die Drehachse des Ventilkörpers (20) befinden, **dadurch gekennzeichnet, dass** der Ventilkörper (20) gegenüber dem Ventilgehäuse (10) ohne jeglichen Anschlag um 360° verdrehbar ist, dass ein außerhalb des Ventilgehäuses (10) befindlicher Teil des Ventilkörpers (20) oder der an diesem angeordnete Handgriff (2) mit mindestens einer Markierung (21, 22, 23) ausgebildet ist, durch welche die Drehstellung des Ventilkörpers (20) angezeigt wird, dass zwei Anschlussstutzen (11, 13) nur mit einem Innengewinde ausgebildet sind sowie der dritte Anschlussstutzen (12) sowohl mit einem Innengewinde (12b) als auch mit einem Außengewinde (12a) ausgebildet ist, dass das Ventilgehäuse (10) mit einem vierten in einer Normalebene auf die Drehachse des Ventilkörpers liegende Anschluss (16) ausgebildet ist, welchem eine Armatur (17) zugeordnet ist, und dass der Ventilkörper (20) mit einer im rechten Winkel zur Durchgangsbohrung (20a) ausgerichteten weiteren Bohrung (102) ausgebildet ist, in welche ein vom Ventilgehäuse (1) abragender Zapfen (101) einragt, welcher mit einer zu den Durchgangskanälen (20a) durchgehenden, mit einem Innengewinde ausgebildeten Bohrung (103) ausgebildet ist, in welche eine Armatur, ein Haltebügel od.dgl. bzw. eine Verschlusselement einsetzbar ist.

2. Mehrwegeventil nach Patentanspruch 1, **dadurch gekennzeichnet, dass** es mit einer an sich bekannten Temperaturanzeige (3) ausgebildet ist, wobei diese Temperaturanzeige (3) gegenüber dem Ventilgehäuse (10) verdrehbar und feststellbar ist.

3. Mehrwegeventil nach Patentanspruch 2, **dadurch gekennzeichnet, dass** die Temperaturanzeige (3) an einem Tragring (33) befestigt ist, welcher verdrehbar gelagert ist und welcher mit Griffen, Stiften (33a) od.dgl. ausgebildet ist, mittels welcher er verdrehbar ist.

4. Mehrwegeventil nach Patentanspruch 3, **dadurch gekennzeichnet, dass** der Tragring (33) mit einem von seiner Außenfläche abragenden Ringflansch (34) ausgebildet ist, welcher von einem Haltering (35) übergriffen ist.

5. Mehrwegeventil nach Patentanspruch 4 **dadurch gekennzeichnet, dass** der Haltering (35) mittels Zapfen (36) in Ausnehmungen des Drehgriffes (2), insbesondere in Bohrungen (26), eingesetzt und in diesen durch Klemmung oder durch Verschraubung befestigt ist.

6. Mehrwegeventil nach Patentanspruch 1, **dadurch gekennzeichnet, dass** der vierte Anschluss durch eine Bohrung (16) mit einem Innengewinde (16a) gebildet ist.

7. Mehrwegeventil nach einem der Patentansprüche 1 und 6, **dadurch gekennzeichnet, dass** die beiden Anschlüsse (12, 16), welchen ein Verschlusselement (15) und eine weitere Armatur (17) zugeordnet sind, im Ventilgehäuse (10) einander diametral gegenüberliegen und koaxial sind.

8. Mehrwegeventil nach einem der Patentansprüche 1, 6 und 7, **dadurch gekennzeichnet, dass** die zusätzliche Armatur z.B. durch einen Entlüftungstopf (17), einen Temperatursensor, ein Druckmessgerät, ein Druckausgleichsgefäß, ein Überdruckventil oder eine Befestigungseinrichtung gebildet ist.

9. Mehrwegeventil nach einem der Patentansprüche 1 bis 8, **dadurch gekennzeichnet, dass** die Stellspindel (25) mit einer Bohrung ausgebildet ist, in welche ein Temperaturfühler (32) eingesetzt ist.

10. Mehrwegeventil nach einem der Patentansprüche 1 bis 9, **dadurch gekennzeichnet, dass** die Stellspindel (25) mit einer zum Ventilkörper (20) durchgehenden Bohrung (25b) ausgebildet ist, in welche ein Temperaturfühler (32) oder ein Druckmessfühler eingesetzt ist.

11. Mehrwegeventil nach einem der Patentansprüche 1 bis 10, **dadurch gekennzeichnet, dass** die Stellspindel (25) gegenüber dem Ventilgehäuse (10c) mittels einer Stoffbüchse (39) abgedichtet ist.

12. Mehrwegeventil nach Patentanspruch 11, **dadurch gekennzeichnet, dass** auf die Stellspindel (25) ein Rohrstück (37) aufgeschraubt ist, durch welches die Stoffbuchse (39) verdichtbar ist.

13. Mehrwegeventil nach einem der Patentansprüche 1 bis 12, **dadurch gekennzeichnet, dass** zwischen dem Ventilkörper (20), welcher kugelförmig ist, und dem Ventilgehäuse (10c) ein unter Wirkung einer Druckfeder (114, 134) stehender Dichtungsring (113, 133) vorgesehen ist.

14. Mehrwegeventil nach Patentanspruch 13, **dadurch gekennzeichnet, dass** die Anschlussstutzen (11, 13) eweils mit einem Innengewinde (111, 131) ausgebildet sind, in welches ein Haltering (112, 132) für den Dichtungsring (113, 133) und die Druckfeder (114, 134) eingeschraubt ist.

15. Mehrwegeventil nach einem der Patentansprüche 1 bis 14, **dadurch gekennzeichnet, dass** dem Handgriff bzw. der Stellspindel ein Fühler (9) zugeordnet ist, durch welchen die Drehlage des Ventilkörpers (20) gegenüber dem Ventilgehäuse (10) feststellbar ist.

## Claims

1. A multiway valve for a heating system to which a rinsing system can be connected, having a valve housing (10), in which there is located a valve body (20) rotatable relative thereto by means of a handle (2) and an adjusting spindle (25), the valve housing (10) comprising at least three connection nozzles (11, 12, 13) in each case arranged at right angles to one another, the valve body (20) additionally comprising a through bore (20a) and a transverse bore connected thereto and the axes of the connection nozzles (11, 12, 13) located in the valve housing (10)as well as of the bores located in the valve body (20) being located in a plane normal to the axis of rotation of the valve body (20), **characterised in that** the valve body (20) is rotatable by 360° relative to the valve housing (10) without any limit stop, **in that** a part of the valve body (20) located outside the valve housing (10) or the handle (2) arranged thereon comprises at least one mark (21,22, 23), by which the rotational position of the valve body (20) is indicated, **in that** two connection nozzles (11 , 13) only have an internal thread, while the third connection nozzles (12) has an internal thread (12a) and an external thread (12b), **in that** the valve housing (10) comprises a fourth port (16) located in a plane normal to the axis of rotation of the valve body, with which port (16) there is associated a fitting (17), **in that** the valve body (20) comprises a further bore (102) oriented at right angles to the through bores (20a), into which further bore (102) there projects a peg (101) protruding from the valve housing (1) which the peg (101) comprises a bore (103) extending through to the through channels (20a) and comprising an internal thread, into which bore (103) a fitting, a retaining clip or the like or a closing element may be inserted.

2. A multiway valve according to claim 1, **characterised in that** it comprises a temperature indicator (3) known per se, this temperature indicator (3) being rotatable and lockable relative to the valve housing (10).

3. A multiway valve according to claim 2, **characterised in that** the temperature indicator (3) is fastened to a carrier ring (33), which is rotatably mounted and which comprises handles, pins (33a) or the like, by means of which it may be rotated.

4. A multiway valve according to claim 3, **characterised in that** the carrier ring (33) comprises an annular flange (34) projecting from its outer surface, over which there engages a retaining ring (35).

5. A multiway valve according to claim 4, **characterised in that** the retaining ring (35) is inserted in recesses, in particular in bores (26), in the turning handle (2) by means of pegs (36) and fastened therein by clamping or screwing.

6. A multiway valve according to claim 1, **characterised in that** the fourth port takes the form of a bore (16) with an internal thread (16a).

7. A multiway valve according to claim 1 and 6, **characterised in that** the two ports (12, 16), with which a closing element (15) and a further fitting (17) are associated, lie diametrically opposite one another in the valve housing (10) and are coaxial.

8. A multiway valve according to any one of claims 1, 6 and 7, **characterised in that** the additional fitting takes the form, for example, of a vent cup (17), a temperature sensor, a pressure gauge, a pressure compensation vessel, an overpressure valve or a fastening means.

9. A multiway valve according to anyone of claims 1 to 8, **characterised in that** the adjusting spindle (25) comprises a bore, into which a temperature probe (32) is inserted.

10. A multiway valve according to anyone of claims 1 to 9, **characterised in that** the adjusting spindle (25) comprises a bore extending through to the valve body (20), into which bore a temperature probe (32) or a pressure probe is inserted.

11. A multiway valve according to anyone of claims 1 to 10, **characterised in that** the adjusting spindle (25) is sealed relative to the valve housing (10c) by means of a packing gland (39).

12. A multiway valve according to claim 11, **characterised in that** a tube piece (37) is screwed onto the adjusting spindle (25), by which tube piece (37) the packing gland (39) may be compressed.

13. A multiway valve according to anyone of claims 1 to 12, **characterised in that** a sealing ring (113, 133) acted upon by a compression spring (114, 134) is provided between the valve body (20), which is spherical, and the valve housing (10c).

14. A multiway valve according to claim 13, **characterised in that** the connection nozzles (11, 13) each comprise an internal thread (111,131), into which a retaining ring (112, 132) for the sealing ring (113, 133) and the compression spring (114, 134) is screwed.

15. A multiway valve according to anyone of claims 1 to 14, **characterised in that** a probe (9) is associated with the handle or the adjusting spindle, by means of which probe (9) the rotational position of the valve body (20) relative to the valve housing (10) may be detected.

## Revendications

1. Soupape à plusieurs voies destinée à une installation de chauffage sur laquelle une installation de rinçage peut être raccordée, comprenant une enveloppe de soupape (10) dans laquelle se trouve un corps de soupape (20) apte à tourner par rapport à ladite enveloppe (10) au moyen d'une poignée (2) et d'une broche de réglage (25), tandis que l'enveloppe de soupape (10) comporte au moins trois tubulures de raccordement (11, 12, 13) placés à angle droit les uns par rapport aux autres, que le corps de soupape (20) présente un perçage traversant (20a)et un perçage transversal qui fait suite à celui-ci, et que les axes des tubulures de raccordements (11, 12, 13) prévus dans l'enveloppe de soupape (10) ainsi que des perçages prévus dans le corps de soupape (20) se trouvent dans un plan normal à l'axe de rotation du corps de soupape (20), **caractérisée en ce que** le corps de soupape (20) est apte à tourner à 360° par rapport à l'enveloppe de soupape (10), sans aucune butée, **en ce qu'**une partie du corps de soupape (20) située à l'extérieur de l'enveloppe de soupape (10) ou la poignée (2) disposée sur celle-ci présente au moins un marquage (21, 22, 23) grâce auquel la position de rotation du corps de soupape (20) est indiquée, **en ce que** deux des tubulures de raccordement (11, 13) sont pourvus seulement d'un filetage intérieur, tandis que la troisième tubulure de raccordement (12) est pourvu d'un filetage intérieur (12a) et d'un filetage extérieur (12b), **en ce que** l'enveloppe de soupape (10) est pourvue d'un quatrième raccord (16) qui est situé dans un plan normal à l'axe de rotation du corps de soupape et auquel est associée une pièce de robinetterie (17), et **en ce que** corps de soupape (20) comporte un perçage supplémentaire (102) qui est dirigé à angle droit par rapport aux perçages de passage (20a), dans lequel entre une saillie (101) qui dépasse de l'enveloppe de soupape (10), et laquelle présente un perçage traversant (103) qui mène aux conduits de passage (20a), qui est pourvu d'un filetage intérieur et dans lequel peuvent être placés une pièce de robinetterie, un étrier de fixation ou un élément similaire et un élément obturateur.

2. Soupape à plusieurs voies selon la revendication 1, **caractérisée en ce qu'**elle est pourvue d'un affichage de température (3) connu en soi, cet affichage de température (3) étant apte à être tourné et à être bloqué par rapport à l'enveloppe de soupape (10).

3. Soupape à plusieurs voies selon la revendication 2, **caractérisée en ce que** l'affichage de température (3) est fixé à un anneau de support (33) qui est monté en rotation et qui est pourvu de manettes, de tiges (33a) ou d'éléments similaires grâce auxquels il peut être tourné

4. Soupape à plusieurs voies selon la revendication 3, **caractérisée en ce que** l'anneau de support (33) est pourvu d'une collerette annulaire (34) qui dépasse de sa surface extérieure et qui est couverte par un anneau de fixation (35).

5. Soupape à plusieurs voies selon la revendication 4, **caractérisée en ce que** l'anneau de fixation (35) est placé à l'aide de chevilles (36) dans des creux de la poignée tournante (2), en particulier dans des perçages (26), et est fixé dans ceux-ci par serrage ou par vissage.

6. Soupape à plusieurs voies selon la revendication 1, **caractérisée en ce que** le quatrième raccord est formé par un perçage (16) présentant un filetage intérieur (16a).

7. Soupape à plusieurs voies selon les revendications 1 et 6, **caractérisée en ce que** les deux raccords (12, 16) auxquels un élément obturateur (15) et une pièce de robinetterie supplémentaire (17) sont associés sont diamétralement opposés et coaxiaux dans l'enveloppe de soupape (10).

8. Soupape à plusieurs voies selon l'une des revendications 1, 6 et 7, **caractérisée en ce que** la pièce de robinetterie supplémentaire est formée par exemple par un pot d'aération (17), un capteur de température, un manomètre, un récipient de compensation de pression, une soupape de surpression ou un dispositif de fixation.

9. Soupape à plusieurs voies selon l'une des revendications 1 à 8, **caractérisée en ce que** la broche de réglage (25) est pourvue d'un perçage dans lequel est placée une sonde de température (32).

10. Soupape à plusieurs voies selon l'une des revendications 1 à 9, **caractérisée en ce que** la broche de réglage (25) est pourvue d'un perçage traversant qui va jusqu'au corps de soupape (20) et dans lequel est placée une sonde de température (32) ou un manomètre.

11. Soupape à plusieurs voies selon l'une des revendications 1 à 10, **caractérisée en ce que** la broche de réglage (25) est rendue étanche par rapport à l'enveloppe de soupape (10c) grâce à un manchon en tissu (39).

12. Soupape à plusieurs voies selon la revendication 11, **caractérisée en ce qu'**une pièce tubulaire (37) grâce à laquelle le manchon en tissu (39) peut être rendu étanche est vissée sur la broche de réglage (25).

13. Soupape à plusieurs voies selon l'une des revendications 1 à 12, **caractérisée en ce qu'**il est prévu entre le corps de soupape (20) qui est sphérique et l'enveloppe de soupape (10c) une bague d'étanchéité (113, 133) qui est soumise à l'action d'un ressort de compression (114, 134).

14. Soupape à plusieurs voies selon la revendication 13, **caractérisée en ce que** les tubulures de raccordement (11, 13) présentent chacun un filetage intérieur (111, 131) dans lequel une bague de fixation (112, 132) pour la bague d'étanchéité (113, 133) et le ressort de compression (114, 134) est vissée.

15. Soupape à plusieurs voies selon l'une des revendications 1 à 14, **caractérisée en ce qu'**il est prévu, associé à la poignée ou à la broche de réglage, un capteur (9) grâce auquel on peut constater la position de rotation du corps de soupape (20) par rapport à l'enveloppe de soupape (10).
